# FASCICULE DE BREVET EUROPEEN

(11) **EP 3 535 141 B1**
(45) Date de publication et mention de la délivrance du brevet: **01.12.2021**
(21) Numéro de dépôt: 17804235.4
(22) Date de dépôt: 31.10.2017
(51) Int. Cl.: B60C 11/12, B60C 11/04, B60C 11/13, B60C 11/03

(54) **BANDE DE ROULEMENT COMPORTANT UN BLOC ALLONGE PRESENTANT UNE PLURALITE DE DECOUPURES**
LAUFFLÄCHE MIT EINEM LANGEN PROFILBLOCK MIT EINER VIELZAHL VON ZUSCHNITTEN
TREAD COMPRISING A LONG TREAD BAR HAVING A PLURALITY OF CUT-OUTS

(30) Priorité: 03.11.2016 FR 1660634
(43) Date de publication de la demande: 11.09.2019
(73) Titulaire: Compagnie Générale des Etablissements Michelin, 63000 Clermont-Ferrand (FR)
(72) Inventeur: DURAND-GASSELIN, Benoit, 63040 Clermont-Ferrand Cedex 9 (FR); MUHLHOFF, Olivier, 63040 Clermont-Ferrand Cedex 9 (FR)
(74) Mandataire: Lasson, Cédric Yves
(86) Numéro de dépôt international: PCT/FR2017/053000
(87) Numéro de publication internationale: WO 2018/083417

(56) Documents cités:
- EP-A1- 2 039 535
- EP-A1- 2 308 696
- WO-A1-98/35842
- DE-A1-102010 060 946
- FR-A1- 2 612 129
- JP-A- H04 133 805
- JP-A- 2003 159 911
- JP-A- 2009 126 293

## Description

### DOMAINE DE L'INVENTION

La présente invention concerne une bande de roulement d'un pneumatique pour véhicule automobile pourvu de moyens pour réduire de façon sensible le bruit en roulage.

### ETAT DE LA TECHNIQUE

Une bande de roulement d'un pneumatique comporte de manière connue un ensemble de découpes dont l'objectif est d'améliorer l'adhérence du pneumatique, en particulier sur sol mouillé. De telles découpures sont des rainures et/ou des incisions.

Il est également connu que la présence de découpures dans une bande de roulement peut être source de bruit lié entre autres à des vibrations de l'air circulant dans les rainures, notamment dans la zone de contact avec la chaussée ou à une répartition non optimale des incisions lors du roulage.

Avec le développement de véhicules de plus en plus silencieux, en particuliers les véhicules électriques, un tel bruit devient gênant.

Une solution est proposée par le document WO2015067644, qui divulgue une bande de roulement comportant une pluralité d'incisions agencées de manière à limiter le bruit pouvant être généré par ces incisions.

Cependant, il a été constaté que dans certaines conditions de roulage, les blocs en matériau caoutchoutique comportant de telles incisions produisent du bruit en partie dû au martellement des blocs de matériau caoutchoutique les constituants en entrée d'aire de contact, lorsque ceux-ci se posent sur le sol.

En effet, chaque paire d'incisions successives forme un sous-bloc de matière de la bande de roulement. Lors d'un roulage du pneumatique, chaque sous-bloc passe par une phase de forte pression de contact avec le sol, puis par une phase dite d'échappement dans laquelle la pression de contact diminue, juste avant que le sous-bloc quitte le sol. Dans cette phase d'échappement une portion de chaque sous-bloc glisse sur le sol.

Comme les blocs se situant dans le sol sont comprimés, ils perdent de la hauteur. Les blocs arrivant à l'entrée de l'aire de contact ayant une hauteur plus importante, ils frappent donc le sol avant leur mise en compression, ceci engendre donc du bruit.

Ce problème est encore accentué sur les bandes de roulement des pneus moderne qui ont des modules de plus en plus faibles, et donc une perte de hauteur plus importante.

Le document JP2009126293 propose aussi une bande de roulement présentant un agencement particulier de découpures sur la bande de roulement. Les documents EP 2 308 696 A1 et EP 2 039 535 A1 divulguent aussi des bandes de roulement pertinentes pour l'invention.

L'invention a donc pour objectif de diminuer le bruit émis par le martellement des blocs de matériau caoutchoutique lors d'un roulage du pneumatique.

### DEFINITIONS

Dans la description suivante on s'attache aux définitions suivantes :
- Par « **pneumatique** », on entend tous les types de bandages élastiques soumis à une pression interne ou non.
- Par « **bande de roulement** » d'un pneumatique, on entend une quantité de matériau caoutchoutique délimitée par des surfaces latérales et par deux surfaces principales dont l'une est destinée à entrer en contact avec une chaussée lorsque le pneumatique roule.
- Par « **surface de la bande de roulement** », on entend l'ensemble des points de la bande de roulement qui sont en contact avec la chaussée lorsque le pneumatique, gonflé à sa pression de référence roule sur cette chaussée. La pression de gonflage de référence est définie dans les conditions d'utilisation du pneumatique telles que définies notamment par la norme E.T.R.T.O (« European Tyre and Rim Technical Organisation »). La largeur C de la surface de la bande de roulement est notamment définie par la norme ETRTO tel que C= (1.075-0.005ar)*S1.001 avec ar le rapport nominal d'aspect et s la grosseur du boudin théorique sur une jante de mesure.
- Par « **bloc »** sur une bande de roulement, on entend un élément en relief délimité par des rainures et comprenant des parois latérales et une face de contact, cette dernière étant destinée à venir en contact avec le sol au cours d'un roulage.
- Par « **bloc allongé** », on entend un bloc présentant une largeur et une longueur sur la circonférence du pneumatique, cette longueur étant très supérieure à la largeur.
- Par « **rainure** », on entend une découpure dans la bande de roulement délimitant des parois de matière, la largeur, correspondant à l'espacement entre les parois de cette découpure est telle que les parois associées à cette découpure ne peuvent pas venir en contact l'une contre l'autre dans des conditions usuelles de roulage. La largeur pour une rainure est supérieure à 2 millimètres.
- Par « **incision** », on entend une découpure dans la bande de roulement délimitant des parois de matière, la largeur correspondant à l'espacement entre les parois de cette découpure est appropriée pour permettre la mise en contact, au moins partielle, des parois de l'incision lors du passage dans l'aire de contact entre le pneumatique et le sol. La largeur pour une incision est inférieure ou égale à 2 millimètres.
- Par « **découpure** », on entend une rainure ou une incision.
- Par « **direction transversale** » ou « direction axiale », on entend une direction parallèle à l'axe de rotation du pneu.
- Par « **direction circonférentielle** », on entend une direction qui est tangente à tout cercle centré sur l'axe de rotation du pneumatique. Cette direction est perpendiculaire à la direction axiale.
- Par « **direction oblique** », on entend une direction qui possède une composante axiale et une composante circonférentielle non nulles.
- Par « **niveau circonférentiel** », on entend un ensemble de points formant une droite, cette droite étant perpendiculaire à la direction circonférentielle.

### RESUME DE L'INVENTION

L'invention porte sur une bande de roulement pour pneumatique comportant au moins un bloc allongé en matériau caoutchoutique de largeur W et de longueur L où L est d'au moins 5 fois W, ce bloc allongé s'étendant selon une direction circonférentielle lorsque la bande de roulement est montée sur le pneumatique, chaque bloc allongé comportant une surface de contact destinée à venir en contact avec un sol et une première paroi latérale et une seconde paroi latérale délimitant cette surface de contact, le bloc allongé comportant une pluralité de découpures obliques successives au nombre de N, et ayant chacune une première extrémité et une deuxième extrémités, la première extrémité et la deuxième extrémité, débouchent respectivement sur la première et la deuxième paroi latérale. En outre, les découpures se succèdent longitudinalement sur la surface de contact de manière qu'au moins l'une des extrémités de l'une des découpures est au même niveau circonférentiel x sur le bloc allongé qu'une extrémité d'une autre découpure circonférentiellement adjacente à ladite une des incisions, un faible décalage entre la position circonférentielle des incisions étant limité à 5% du pas entre les deux incisions.

L'invention propose ainsi, d'une part, d'assurer une continuité dans l'organisation des incisions dans le bloc allongé. En effet, au moins l'une des extrémités de l'une des découpures est au même niveau circonférentiel sur le bloc allongé qu'une extrémité d'une autre découpure. En d'autres termes, lorsqu'une découpure atteint une de ses extrémités, une autre découpure débute à un même niveau circonférentiel.

De cette manière, on limite la variation du taux d'entaillement selon la direction circonférentielle dans le bloc allongé et les performances acoustiques du pneumatique sont alors améliorées.

De plus, tout ou partie des découpures comportent au moins un plot de rétrécissement faisant protubérance à partir d'une paroi de la découpure.

Cette géométrie propose ainsi que la distance entre les parois des découpures se rétrécie. Cette proximité des parois fait que dans la phase de forte pression, lorsque la bande de roulement se met à plat en contact avec le sol, les parois viennent en contact les unes contre les autres et bloquent ainsi la diminution de la hauteur des blocs formés par les incisions. Ainsi, la différence de hauteur entre les blocs qui sont déjà en contact avec le sol et les blocs qui arrivent au contact du sol, est réduite. En conséquence, le phénomène de frappe est réduit ce qui permet de réduire le bruit émis par le pneu.

Avantageusement, le plot de rétrécissement remonte à la surface de contact.

Ainsi, un meilleur blocage des blocs est assuré et de le phénomène de frappe est réduit.

Avantageusement, le rétrécissement de la découpure se fait sur au moins 20% de la hauteur de ladite incision ou sur au moins 20% de la surface de la paroi dont le plot fait protubérance.

Selon une variante, la paroi de découpure opposée au plot est inclinée.

Ainsi, améliore la forme de l'usure.

Selon une autre variante, le rétrécissement est formé par deux plots en vis-à-vis faisant protubérance à partir de parois opposées de la découpure.

De cette manière on améliore la résistance au roulement du pneumatique.

Avantageusement, la largeur du plot diminue en s'éloignant de la paroi à partir de laquelle ledit plot fait protubérance.

De cette manière on améliore également la résistance au roulement du pneumatique, et on réduit le risque de fissuration à la base des plots.

Avantageusement, la découpure est chanfreinée en tout ou partie sur la surface de la bande de roulement.

Ceci permet d'améliorer les performances du pneumatique en freinage sur sol sec.

Avantageusement, la largeur de la découpure au niveau du rétrécissement est inférieure ou égale à 0,7 mm.

On améliore la résistance au roulement du pneumatique et on réduit le bruit.

Avantageusement, la largeur de la découpure au niveau du rétrécissement est comprise entre 0,3 mm et 0,5 mm.

On améliore d'avantage la résistance au roulement du pneumatique et on réduit d'avantage le bruit.

Selon un exemple de réalisation, au moins une découpure présente une profondeur maximale comprise entre 50% et 100% de la hauteur de la première et/ou la deuxième paroi latérale.

Ceci permet d'augmenter la rigidité longitudinale de la bande de roulement, ce qui améliore le freinage sur sol sec.

Selon une variante, au moins une découpure présente une profondeur radiale maximale comprise entre 80% et 95% de la hauteur de la première et/ou la deuxième paroi latérale. Ceci permet d'augmenter la rigidité longitudinale et donc le freinage sur sol mouillé.

Selon un exemple de réalisation, chaque découpure a sa première extrémité débouchant dans la première paroi latérale et sa deuxième extrémité débouchant dans la seconde paroi latérale.

Ceci rend le pneu plus souple et se met mieux à plat. En conséquence, l'énergie dissipée à chaque tour de roue diminue.

Selon une variante, chaque découpure a sa première extrémité débouchant dans la première paroi latérale et sa deuxième extrémité ne débouchant pas dans la seconde paroi latérale ou que chaque découpure a sa première extrémité débouchant dans la deuxième paroi latérale et sa deuxième extrémité ne débouchant pas dans la première paroi latérale.

Ceci permet d'augmenter la rigidité longitudinale, donc le freinage sur sol sec.

Selon une variante, pour une première découpure et une deuxième découpure qui se succèdent longitudinalement dans le bloc allongé et ayant chacune une première extrémité débouchant dans la première paroi latérale, la deuxième extrémité de la première découpure débouche dans la deuxième paroi latérale et la deuxième extrémité de la deuxième découpure ne débouche pas dans la deuxième paroi latérale.

Les incisions débouchant sur la seconde paroi latérale forment des sous-blocs dans le bloc allongé. Chaque sous-bloc comprend ainsi une découpure qui ne débouche pas sur cette seconde paroi latérale. On favorise ainsi la mise à plat du bloc allongé.

Ceci permet aussi d'augmenter la rigidité longitudinale et en conséquence le freinage sur sol sec.

Avantageusement, la découpure est une rainure. On améliore ainsi l'écoulement de l'eau hors de la bande de roulement lorsque le pneumatique roule sur un sol mouillé.

Dans ce cas, par au même niveau sur la bande de roulement, on entend que pour deux rainures successives sur la bande de roulement, la deuxième extrémité de la première rainure est en regard de la première extrémité de la deuxième rainure.

Avantageusement, la découpure est une incision. On améliore ainsi l'adhérence de la bande de roulement sur sol mouillé sans trop diminuer la rigidité globale du bloc allongé.

L'invention porte aussi sur un pneu comportant une bande de roulement telle que décrite précédemment.

### BREVE DESCRIPTION DES DESSINS

D'autres caractéristiques et avantages de l'invention ressortiront de la description suivante, donnée à titre d'exemple, sans caractère limitatif, en regard des dessins annexés dans lesquels :
- la figure 1 représente schématiquement une vue partielle d'une bande de roulement, selon un premier exemple de réalisation de l'invention;
- les figures 2 à 5 illustrent des exemples de profils dans la profondeur de la bande de roulement d'une incision selon l'invention.
- les figures 6 à 8 illustrent des exemples de rainures selon l'invention.

### DESCRIPTION DETAILLEE

Dans la description qui va suivre, des éléments sensiblement identiques ou similaires seront désignés par des références identiques.

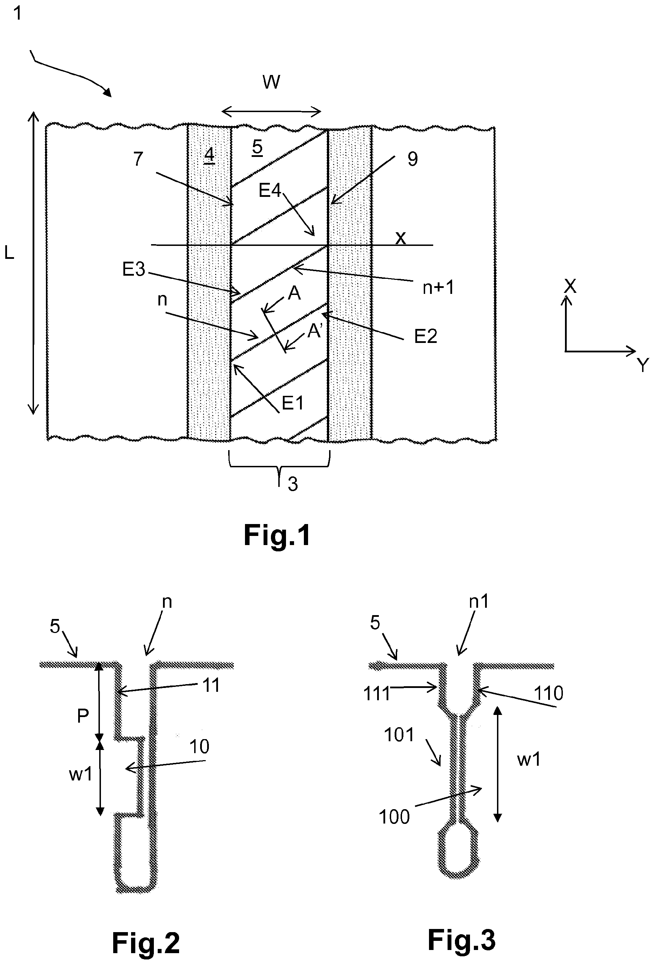

La figure 1 représente une vue partielle d'une bande de roulement 1 d'un pneumatique selon un premier mode de réalisation de l'invention.

La bande de roulement 1 comporte au moins un bloc 3 en matériau caoutchoutique. Le bloc 3 est ici délimité par deux rainures 4 qui ont été ici grisées sur la figure 1 pour favoriser la compréhension de l'invention. Plus particulièrement, le bloc 3 présente une largeur W et une longueur L, cette longueur L étant très supérieure à la largeur W. Par très supérieure, on entend que la longueur L est au moins égale à 5 fois la largeur W. De cette manière, lorsque la bande de roulement 1 est montée sur un pneumatique, le bloc 3 a l'allure d'une bande s'étendant selon une direction circonférentielle X. Cette bande peut s'étendre sur toute la circonférence du pneumatique. En variante, cette bande s'étend sur une partie seulement de cette circonférence.

De plus, le bloc 3 comporte une surface de contact 5 destinée à venir en contact avec un sol et une première paroi latérale 7 et une seconde paroi latérale 9 délimitant cette surface de contact 5.

En outre, le bloc 3 comporte une pluralité d'incisions n, n+1 débouchant sur la surface de contact 5. Les incisions n, n+1 s'étendent selon une direction oblique en débouchant avec leurs premières extrémités respectives E1, E3 sur la première paroi latérale 7 et par leurs deuxièmes extrémités respectives E2, E4 sur la seconde paroi latérale 9.

Les incisions n, n+1 du bloc 3 sont ici orientées dans le même sens, c'est-à-dire que les incisions s'étendent de la première paroi latérale 7 vers la seconde paroi latérale 9 selon un sens positif en X et en Y. Ces incisions sont réparties sur la surface de contact 5 du bloc 3 de sorte que lorsqu'une incision n atteint la seconde paroi latérale 9, une autre incision n+1 débute à partir de la première paroi latérale 7, sensiblement au même niveau sur le bloc 3.

Par « au même niveau x » sur le bloc, on entend une position circonférentielle x déterminée sur ce bloc. En outre, par « sensiblement », on entend qu'il peut exister un faible décalage entre la position circonférentielle des incisions n, n+1. Ce décalage est cependant limité. Il est de manière préférentielle inférieur à 5 % du pas les entre deux incisions n, n+1 délimitant le sous-bloc 8. Pour évaluer la présence ou non d'un tel décalage, on utilisera la notion de fibre neutre associée à chaque incision.

En outre, chaque incision n, n+1 comporte un plot de rétrécissement qui rétrécit la distance entre les parois des incisions. En particulier, le rétrécissement se fait à partir d'une certaine profondeur.

La figure 2 illustre une vue en coupe selon l'axe A-A' de la figure 1 illustrant le profile dans la profondeur de la bande de roulement d'une incision n selon un premier exemple de réalisation. Dans cet exemple de réalisation, l'incision n comporte à une profondeur P de la bande de roulement un plot de rétrécissement 10 faisant protubérance à partir d'une paroi 11 de l'incision n.

La figure 3 est une variante dans laquelle le rétrécissement de l'incision est formé par deux plots 100, 101 en vis-à-vis. Chaque plot 100, 101 fait protubérance à partir d'une paroi 110, 111 de l'incision n1.

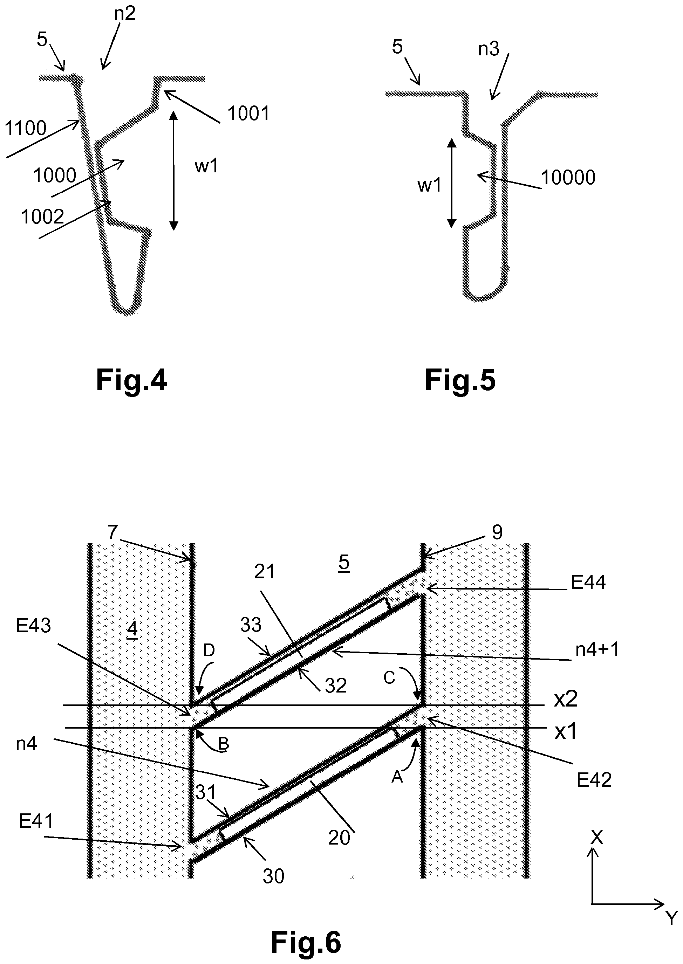

La figure 4 est une autre variante dans laquelle la paroi 1100 de la découpure n2 opposée au plot 1000 est inclinée. On note aussi que le plot 1000 faisant protubérance de la paroi opposée 1001 présente une paroi 1002 en regard des parois inclinée 1100, parallèle à celle-ci.

La figure 5 est une autre variante dans laquelle l'incision n3 comporte un chanfrein en surface de la bande de roulement.

On note que dans l'exemple de la figure 2 le plot 10 a une largeur fixe, alors que dans les exemples des figures 3, 4 et 5 la largeur w1 des plots 100,101 ; 1000 ; 10000 diminue en s'éloignant de la paroi à partir de laquelle chaque plot fait protubérance.

La figure 6 illustre un exemple de deux rainures n4, n4+1 selon l'invention, successives sur la bande de roulement 5. La rainure n+4 présente une première extrémité E41 et une deuxième extrémité E42 et la rainure n4+1 présente une première extrémité E43 et une deuxième extrémité E44. Les extrémités E42 et E43 sont en regard sur la bande de roulement.

En particulier, l'extrémité supérieure A de la paroi inférieure 30 de la rainure n4 est alignée, au niveau x1 selon la direction circonférentielle X, avec l'extrémité inférieure B de la paroi inférieur 32 de la rainure n4+1. En outre, l'extrémité supérieure C de la paroi supérieure 31 de la rainure n4 est alignée, au niveau x2 selon la direction circonférentielle X, avec l'extrémité inférieure D de la paroi supérieure 33 de la rainure n4+1.

De plus, chacune des rainures n4, n4+1 comporte un plot de rétrécissement 20, 21, faisant protubérance à partir d'une paroi 30, 31 de la rainure n4, n4+1.

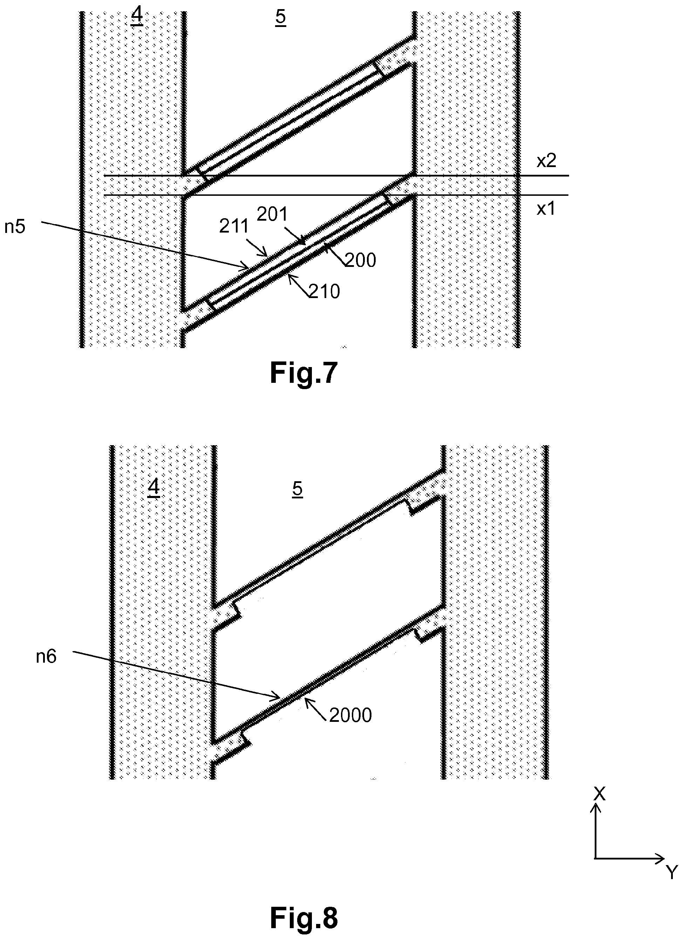

La figure 7 est une variante dans laquelle le rétrécissement de chaque rainure n5 est formé par deux plots 200, 201 en vis-à-vis. Chaque plot 200, 201 fait protubérance à partir d'une paroi 210, 211 de la rainure n5.

On note que dans les exemples des figures 6 et 7, les plots de rétrécissement 20 ; 200, 201 sont à une certaine profondeur de la surface de contact 5 de la bande de roulement.

La figure 8 illustre une autre variante dans laquelle le plot de rétrécissement 2000 de la rainure n6 remonte à la surface de contact 5 de la bande de roulement.

On note également que pour les exemples des figures 6 à 8, le rétrécissement selon la longueur des rainures n4, n5, n6, est partiel, ici sur une partie centrale.

Dans une variante non illustrée, les longueurs des découpures n, n+1 sont réduites. Les extrémités E2, E4 sont alors distantes d'une distance D. Cette distance D présente une composante transversale au moins égale à 10% de la largeur W du bloc allongé.

Dans une variante non illustrée, le bloc allongé comporte une série de incisions obliques n, n+1 débouchant sur la première paroi latérale 7 et s'étendant jusqu'à des extrémités E2, E4 de incisions qui ne débouchent pas sur les parois latérales 7, 9. Les extrémités E2, E4 sont ici situées au niveau d'un plan médian de la bande de roulement.

Les incisions n, n+1 sont réparties sur la surface de contact 5 de sorte que lorsque la découpure n atteint son extrémité de découpure E2, une autre découpure n+1 débute à partir de la première paroi latérale 7, sensiblement à un même niveau x circonférentiel sur le bloc allongé 3.

Ainsi, lorsqu'on projette les incisions n, n+1 selon la direction circonférentielle X, il n'y a pas de superposition d'incisions selon cette direction circonférentielle X. De cette manière, on limite la variation du taux d'entaillement dans le bloc allongé 3 selon cette direction circonférentielle.

On notera également que comme les incisions n, n+1 ne traversent pas le bloc allongé 3, on s'assure d'une bonne rigidité globale du bloc allongé 3.

Dans une variante non illustrée, la découpure n ne débouche pas dans la seconde paroi latérale 9 et la découpure n+1 débouche sur la seconde paroi latérale 9 de manière que le bloc allongé 3 est formé par une pluralité de sous-blocs.

Selon un mode de réalisation non limitatif, au moins une découpure présente une profondeur maximale comprise entre 50% et 100% de la hauteur de la première et/ou la deuxième paroi latérale 7, 9. Cette profondeur est mesurée à partir de la surface de contact 5.

Selon une variante, au moins une découpure présente une profondeur maximale comprise entre 80% et 95% de la hauteur de la première et/ou de la deuxième paroi latérale 7, 9.

## Revendications

1. Bande de roulement pour pneumatique comportant au moins un bloc (3) allongé en matériau caoutchoutique de largeur W et de longueur L est au d'au moins 5 fois W , ce bloc allongé s'étendant selon une direction circonférentielle (X) lorsque la bande de roulement (1) est montée sur le pneumatique, chaque bloc allongé (3) comportant une surface de contact (5) destinée à venir en contact avec un sol et une première paroi latérale (7) et une seconde paroi latérale (9) délimitant cette surface de contact (5), le bloc allongé (3) comportant une pluralité de découpures obliques successives (n, n+1) au nombre de N, et ayant chacune une première extrémité (E1, E3) et une deuxième extrémités (E2, E4), la première extrémité (E1, E3) et la deuxième extrémité (E2, E4), débouchent respectivement sur la première et la deuxième paroi latérale (7, 9), tout ou partie des découpures (n, n+1) comportant au moins un plot de rétrécissement faisant protubérance à partir d'une paroi de la découpure, **caractérisée en ce que**, les découpures (n, n+1) se succèdent longitudinalement sur la surface de contact (5) de manière qu'au moins l'une des extrémités (E1, E2) de l'une des découpures (n) est au même niveau circonférentiel x sur le bloc allongé (3) qu'une extrémité (E3, E4) d'une autre découpure (n+1) circonférentiellement adjacente à ladite une des incisions (n), un faible décalage entre la position circonférentielle des incisions (n, n+1) étant limité à 5% du pas entre les deux incisions (n, n+1).

2. Bande de roulement selon la revendication 1, **caractérisée en ce que** le plot de rétrécissement remonte à la surface de contact (5).

3. Bande de roulement selon l'une des revendications 1 ou 2, **caractérisée en ce que** le rétrécissement de la découpure se fait sur au moins 20% de la hauteur de ladite découpure.

4. Bande de roulement selon l'une des revendications 1 ou 2, **caractérisée en ce que** le rétrécissement de la découpure se fait sur au moins 20% de la surface de la paroi dont le plot fait protubérance.

5. Bande de roulement selon l'une des revendications 1 à 4, **caractérisée en ce que** la paroi de la découpure opposée au plot est inclinée.

6. Bande de roulement selon l'une quelconque des revendications 1 à 3, **caractérisée en ce que** le rétrécissement est formé par deux plots en vis-à-vis faisant protubérance à partir de parois opposées de la découpure.

7. Bande de roulement selon l'une quelconque des revendications 1 à 5, **caractérisée en ce que** la largeur du plot diminue en s'éloignant de la paroi à partir de laquelle ledit plot fait protubérance.

8. Bande de roulement selon l'une quelconque des revendications 1 à 6, dans lequel la découpure est chanfreinée en tout ou partie sur la surface de la bande de roulement.

9. Bande de roulement selon l'une quelconque des revendications 1 à 7, dans lequel la largeur de la découpure au niveau du rétrécissement est inférieure ou égale à 0,7 mm.

10. Bande de roulement selon l'une quelconque des revendications 1 à 8, dans lequel la largeur de la découpure au niveau du rétrécissement est comprise entre 0,3 mm et 0,5 mm.

11. Bande de roulement selon l'une quelconque des revendications 1 à 10 dans laquelle les découpures sont des incisions.

12. Bande de roulement selon l'une quelconque des revendications 1 à 10 dans laquelle les découpures sont des rainures.

13. Pneu **caractérisé en ce qu'**il possède une bande de roulement (1) selon l'une des revendications 1 à 12.

## Patentansprüche

1. Laufstreifen für einen Reifen, welcher wenigstens einen lang gestreckten Block (3) aus Kautschukmaterial mit einer Breite W und einer Länge L, die mindestens das 5-Fache von W beträgt, aufweist, wobei sich dieser lang gestreckte Block in einer Umfangsrichtung (X) erstreckt, wenn der Laufstreifen (1) auf dem Reifen angebracht ist, wobei jeder lang gestreckte Block (3) eine Kontaktfläche (5), die dazu bestimmt ist, mit einem Boden in Kontakt zu kommen, und eine erste Seitenwand (7) und eine oder mehrere zweite Seitenwand (9), die diese Kontaktfläche (5) begrenzen, aufweist, wobei der lang gestreckte Block (3) eine Vielzahl von aufeinander folgenden schrägen Ausschnitten (n, n+1) aufweist, deren Anzahl N beträgt und die jeweils ein erstes Ende (E1, E3) und ein zweites Ende (E2, E4) aufweisen, wobei das erste Ende (E1, E3) und das zweite Ende (E2, E4) an der ersten bzw. der zweiten Seitenwand (7, 9) münden, wobei alle Ausschnitte (n, n+1) oder einige davon wenigstens einen Verengungsklotz aufweisen, der von einer Wand des Ausschnitts aus vorsteht,
**dadurch gekennzeichnet, dass** die Ausschnitte (n, n+1) auf der Kontaktfläche (5) so in Längsrichtung aufeinanderfolgen, dass wenigstens eines der Enden (E1, E2) eines der Ausschnitte (n) sich auf derselben Umfangshöhe x an dem lang gestreckten Block (3) befindet, wie ein Ende (E3, E4) eines anderen Ausschnitts (n+1), der dem einen der Einschnitte (n) in Umfangsrichtung benachbart ist, wobei ein geringfügiger Versatz zwischen den Umfangspositionen der Einschnitte (n, n+1) auf 5 % des Abstands zwischen den zwei Einschnitten (n, n+1) begrenzt ist.

2. Laufstreifen nach Anspruch 1, **dadurch gekennzeichnet, dass** sich der Verengungsklotz bis hinauf zur Kontaktfläche (5) erstreckt.

3. Laufstreifen nach einem der Ansprüche 1 oder 2, **dadurch gekennzeichnet, dass** die Verengung des Ausschnitts auf wenigstens 20 % der Höhe des Ausschnitts erfolgt.

4. Laufstreifen nach einem der Ansprüche 1 oder 2, **dadurch gekennzeichnet, dass** die Verengung des Ausschnitts auf wenigstens 20 % der Fläche der Wand erfolgt, von welcher der Klotz vorsteht.

5. Laufstreifen nach einem der Ansprüche 1 bis 4, **dadurch gekennzeichnet, dass** die dem Klotz gegenüberliegende Wand des Ausschnitts geneigt ist.

6. Laufstreifen nach einem der Ansprüche 1 bis 3, **dadurch gekennzeichnet, dass** die Verengung von zwei einander gegenüberliegenden Klötzen gebildet wird, die von gegenüberliegenden Wänden des Ausschnitts vorstehen.

7. Laufstreifen nach einem der Ansprüche 1 bis 5, **dadurch gekennzeichnet, dass** sich die Breite des Klotzes mit zunehmendem Abstand von der Wand, von welcher der Klotz vorsteht, verringert.

8. Laufstreifen nach einem der Ansprüche 1 bis 6, wobei der Ausschnitt an der Oberfläche des Laufstreifens ganz oder teilweise abgeschrägt ist.

9. Laufstreifen nach einem der Ansprüche 1 bis 7, wobei die Breite des Ausschnitts an der Verengung kleiner oder gleich 0,7 mm ist.

10. Laufstreifen nach einem der Ansprüche 1 bis 8, wobei die Breite des Ausschnitts an der Verengung zwischen 0,3 mm und 0,5 mm liegt.

11. Laufstreifen nach einem der Ansprüche 1 bis 10, wobei die Ausschnitte Einschnitte sind.

12. Laufstreifen nach einem der Ansprüche 1 bis 10, wobei die Ausschnitte Rillen sind.

13. Reifen, **dadurch gekennzeichnet, dass** er einen Laufstreifen (1) nach einem der Ansprüche 1 bis 12 besitzt.

## Claims

1. Tread for a tyre, having at least one elongate block (3) of rubbery material of width W and length L, where L>>W, said elongate block extending in a circumferential direction (X) when the tread (1) is mounted on the tyre, each elongate block (3) having a contact surface (5) intended to come into contact with the ground and a first lateral wall (7) and a second lateral wall (9) delimiting said contact surface (5), the elongate block (3) having a plurality of N successive oblique cuts (n, n+1) that each have a first end (E1, E3) and a second end (E2, E4), at least one of the first end (E1, E3) and the second end (E2, E4) opening onto the first or second lateral wall (7, 9),all or some of the cuts (n, n+1) having at least one narrowing protrusion protruding from a wall of the cut, **characterized in that** the cuts (n, n+1) longitudinally follow one another on the contact surface (5) such that at least one of the ends (E1, E2) of one of the cuts (n) is at the same circumferential level x on the elongate block (3) as one end (E3, E4) of another cut (n+1) circumferencially adjacent to said one incisions (n), a small offset between the circumferential position of the incisions (n, n + 1) being limited to 5% of the pitch between the two incisions (n, n + 1)

2. Tread according to Claim 1, **characterized in that** the narrowing protrusion extends up to the contact surface (5) .

3. Tread according to either of Claims 1 and 2, **characterized in that** the cut narrows over at least 20% of the height of said cut.

4. Tread according to either of Claims 1 and 2, **characterized in that** the cut narrows over at least 20% of the surface of the wall from which the protrusion protrudes.

5. Tread according to one of Claims 1 to 4, **characterized in that** the wall of the cut opposite the protrusion is inclined.

6. Tread according to any one of Claims 1 to 3, **characterized in that** the narrowing is formed by two facing protrusions that protrude from opposite walls of the cut.

7. Tread according to any one of Claims 1 to 5, **characterized in that** the width of the protrusion decreases away from the wall from which said protrusion protrudes.

8. Tread according to any one of Claims 1 to 6, wherein the cut is wholly or partially chamfered at the surface of the tread.

9. Tread according to any one of Claims 1 to 7, wherein the width of the cut at the narrowing is less than or equal to 0.7 mm.

10. Tread according to any one of Claims 1 to 8, wherein the width of the cut at the narrowing is between 0.3 mm and 0.5 mm.

11. Tread according to any one of Claims 1 to 10, wherein the cuts are sipes.

12. Tread according to any one of Claims 1 to 10, wherein the cuts are grooves.

13. Tyre, **characterized in that** it has a tread (1) according to one of Claims 1 to 12.
